# EUROPÄISCHE PATENTANMELDUNG

(11) **EP 0 788 209 A1**
(43) Veröffentlichungstag der Anmeldung: **06.08.1997**
(21) Anmeldenummer: 96112582.0
(22) Anmeldetag: 03.08.1996
(51) Int. Cl.: H02H 3/33

(54) **Fehlerstromschutzschalter mit Notaus-Zusatzschaltgerät**

(30) Priorität: 07.08.1995 DE 19528918
(71) Anmelder: Berthold, Rainer, D-69251 Gaiberg (DE)
(72) Erfinder: Berthold, Rainer, D-69251 Gaiberg (DE)

(57) **Zusammenfassung**

Fehlerstromschutzschalter sind Geräte, die Personen und Sachen vor schädlichen Einwirkungen des elektrischen Stromes schützen.
Es kommt jedoch vor, daß diese im Ernstfall versagen, weil ihre Hauptstromkontakte verschweißt sind, ihre Schaltwerke klemmen, die Magnetkontakte ihrer Auslöser kleben oder anderweitige Defekte vorliegen.
Der Fehlerstromschutzschalter mit Notaus - Zusatzschaltgerät, bzw. Notaus - Zusatzschalteinrichtung ist ein Fehlerstromschutzschalter, der bei Versagen der Fehlerstromschutzfunktion zuverlässig, innerhalb einer bestimmten, ungefährlichen Zeit einmal und irreversibel die Hauptstromkontakte unterbricht.
Diese Aufgabe wird gelöst, indem mit Hilfe eines geeigneten, herkömmlichen Strommeßsystems innerhalb des Fehlerstromschutzschalters nach der Sekundärwicklung seines Summenstromwandlers im Fehlerstromfall der Fehlerstrom gemessen wird. Überschreitet er einen vorgegebenen Grenzwert und schaltet er nicht innerhalb einer vorgegebenen Zeit die Hauptstromkontakte ab, werden in einer Zusatzeinrichtung oder einem Zusatzgerät die Netzzuleitungen L und N irreversibel durchtrennt.
Das Erkennen des Öffnens der Hauptststromkontakte erfolgt über eine Spannungsmessung unmittelbar hinter den Hauptstromkontakten.
Das Durchtrennen der Netzzuleitungen in der Zusatzeinrichtung erfolgt entweder durch Öffnen von Kontakten, Zerschneiden der Leitungen oder durch Zerstören der Stromleitungen mit Hilfe einer Miniatursprengladung.

## Beschreibung

Die Erfindung betrifft einen Fehlerstromschutzschalter nach dem Oberbegriff des Anspruchs 1.
Fehlerstromschutzschalter sind Geräte, die Personen und Sachen vor schädlichen Einwirkungen des elektrischen Stromes schützen.
Es kommt jedoch vor, daß diese im Ernstfall versagen, weil ihre Hauptstromkontakte verschweißt sind, ihre Schaltwerke klemmen, die Magnetkontakte ihrer Auslöser kleben oder anderweitige Defekte vorliegen.
Der Erfindung liegt daher die Aufgabe zugrunde, einen Fehlerstromschutzschalter zu schaffen, der bei Versagen der Fehlerstromschutzfunktion zuverlässig, innerhalb einer bestimmten, ungefährlichen Zeit einmal und irreversibel die Hauptstromkontakte unterbricht.
Diese Aufgabe wird bei einer gattungsgemäßen Einrichtung durch die kennzeichnenden Merkmale der Ansprüche gelöst.

Mit Hilfe eines geeigneten, herkömmlichen Strommeßsystems wird innerhalb des Fehlerstromschutzschalters nach der Sekundärwicklung seines Summenstromwandlers im Fehlerstromfall der Fehlerstrom gemessen. Überschreitet er einen vorgegebenen Grenzwert und schaltet er nicht innerhalb einer vorgegebenen Zeit die Hauptstromkontakte ab, werden in einer Zusatzeinrichtung oder einem Zusatzgerät die Netzzuleitungen L und N irreversibel durchtrennt.
Das Erkennen des Öffnens der Hauptststromkontakte erfolgt über eine Spannungsmessung unmittelbar hinter den Hauptstromkontakten.
Das Durchtrennen der Netzzuleitungen in der Zusatzeinrichtung erfolgt entweder durch Öffnen von Kontakten, Zerschneiden von Leitungen oder durch Zerstören der Stromleitungen mit Hilfe einer Miniatursprengladung.
Anhand von Zeichnungen soll die Erfindung, sowie deren vorteilhafte Ausgestaltungen,näher erläutert und beschrieben werden.

Es zeigen:
**Figur 1** das Prinzip des erfindungsgemäßen Fehlerstromschutzschalters mit Fehlerstrom- und Spannungsmeßeinrichtung sowie mit der Zusatzeinrichtung, in der die Netzzuleitungen im Falle des Versagens der Fehlerstromschutzfunktion durchtrennt werden.
**Figuren 2 - 8** verschiedene elektromechanische Ausführungsformen der Einrichtung zum Trennen der Netzleitungen für den Fall des Versagens des Fehlerstromschutzschalters.
**Figuren 9 - 10** beispielhaft zwei pyrotechnische Ausführungsformen zum Antrieb der Trennvorrichtung gemäß Figuren 3 - 9.
**Figuren 11 bis 13** drei weitere technische Ausführungsformen der Einrichtung zum Trennen der Netzzuleitungen im Falle eines Versagens des Fehlerstromschutzschalters.

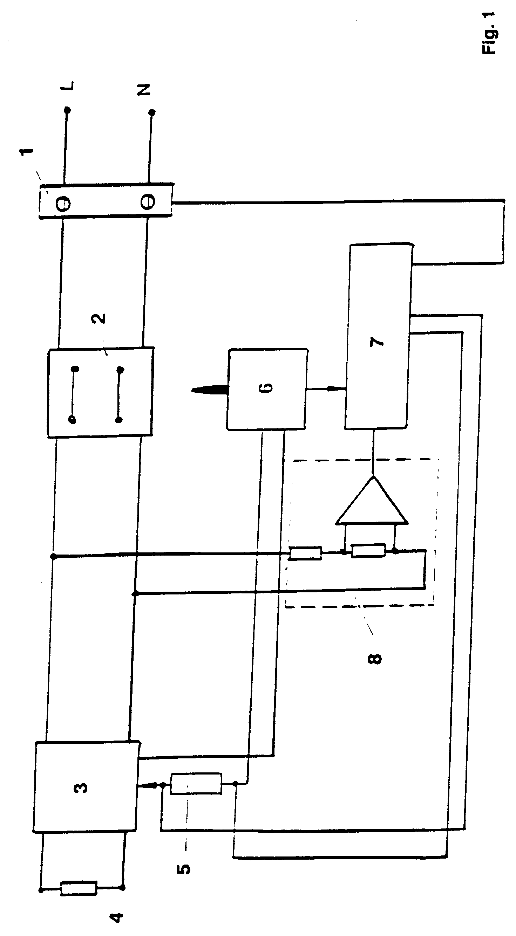

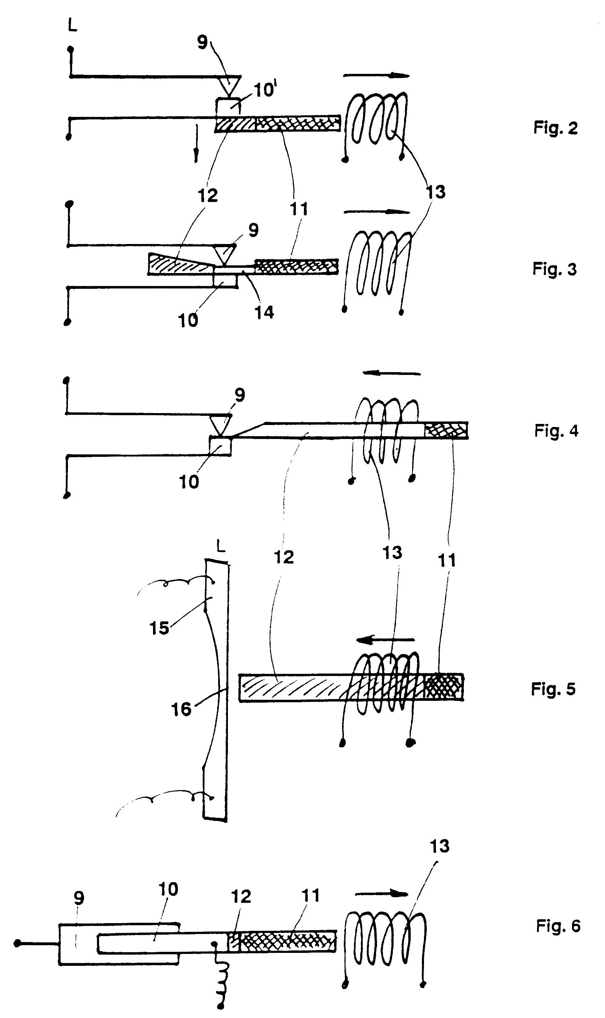

Gemäß **Fig. 1** führen die Netzleitungen N und L durch die Einrichtung 1 zum Trennen derselben über das Schaltwerk 2 durch den Summenstromwandler 3 zum Verbraucher 4. Das Fehlerstrommeßsystem 5, welches zwischen Summenstromwandler 3 und Auslöser 6 angeortnet ist, liefert seine Meßwerte an den Mikroprozessor 7, der auch die von der Spannungsmeßeinrichtung 8 gewonnene Spannung auswertet. Ist diese Null hat das Schaltwerk 2 geöffnet. Beträgt diese unverändert 230 V, gibt der Mikroprozessor 7 oder ein Mikrocomputer nach einer bestimmten, vorgegebenen Zeit an die Einrichtung 1 zum Trennen der Netzzuleitungen den Befehl zum Unterbrechen, was auf unterschiedlichste Art und Weise erfolgen kann, sowie anhand der Fig.3 -13 näher beschrieben wird.
Die **Figuren 2 - 4** zeigen drei elektromechanische Trenneinrichtungen, die sowohl für den Phasenleiter L als auch für den Nulleiter N geeignet sind. Es bedeuten 9 und 10 zwei Stromkontakte, von denen 10 eine Federkraft besitzt, die in Richtung Öffnen wirkt. Der an den Magnetkern 11 befestigte Isolierkörper 12 verhindert jedoch das Öffnen im Normalfall. Kommt vom Mikroprozessor 7 der Befehl zum Öffnen der Kontakte 9 und 10, so zieht die Spule 13 schlagartig den Magnetkern 11 in sich hinein, so daß der Kontakt 10 öffnet.
**In Fig. 3** ist der Isolierkörper 12 keilförmig ausgebildet und öffnet die Kontakte 9 und 10, wenn der Magnetkern 11 ihn in Richtung Spule 13 zieht. In diesem Ausführungsbeispiel übt der Kontakt 10 eine Kraft nach oben aus. Zwischen den Kontakten befindet sich ein elektrisch leitendes Blech 14, welches den Keil 12 in Richtung Spule 13 zieht. Vorteilhaft ist auch, daß dieses Blech ein Isolierteil ist, das an der Stelle der Kontakte 9 und 10 ein Loch besitzt.
In **Fig. 4** wird der Isolierkörper 12 zwischen die Kontakte 9 und 10 gestoßen, wenn der Magnetkern 11 in die Spule 13 hineingezogen wird.
**Fig. 5** stellt einen Leiter 15 mit Sollbruchstelle 16 dar. Der Isolierkörper bricht diese Stelle auf, sobald der Magnetkern 11 in die Spule 13 schießt. Dabei ist er vorteilhafterweise messerförmig ausgebildet. Ist der Antrieb stark genug, wird bei Verwendung eines isolierten Messers 12 auf die Sollbruchstelle 16 verzichtet.
**Fig. 6** zeigt eine steckkontaktförmige Anordnung zum Trennen der Leitungen L und N.
Die Spule 13 zieht mit Hilfe des Magnetkerns 11 den Kontaktstift 10 aus der Kontakthülse 9 heraus.

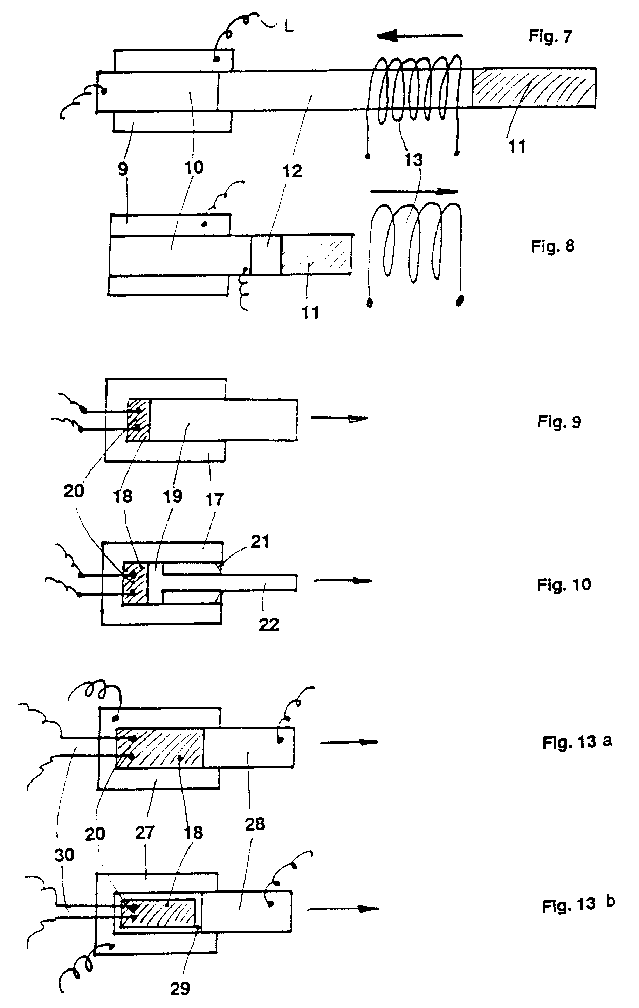

**Fig. 7** zeigt wie Fig. 6 eine Steckkontaktanordnung, jedoch schiebt der Anker 11 das Isolierstück 12 durch die Spule 13 hindurch und damit den Kontaktstift 10 aus der Kontakthülse 9 heraus.
In **Fig. 8** wird der Kontaktstift 10 mit Hilfe des Magnetkerns 11 aus der Kontakthülse 9 herausgezogen.
Die **Figuren 9 und 10** zeigen ein weiteres Antriebssystem für die Trennung der Netzzuleitungen L und N. Dabei stellt 17 ein patronenähnliches Gebilde dar, das mit einem Sprengmittel 18, wie z.B. Pulver, gefüllt ist. Die Patrone 17 ist mit einem Kolben 19 verschlossen. Kommt der Befehl zum Trennen der Leitungen , so wird über die Zündfunkenstrecke 20 das Pulver 18 gezündet, der Kolben 19 übt dann alle anhand der Figuren 2 - 8 beschriebenen Antriebsfunktionen aus, die dort der Magnetkern 11 ausübt.
In **Fig. 10** verhindert die Verengung 21, daß der scheibenförmige Kolben 19 aus der Patrone 17 austritt. Dabei ist der Kolben mit einem Stößel 22 verbunden, der die o.g. Funktionen ausübt.

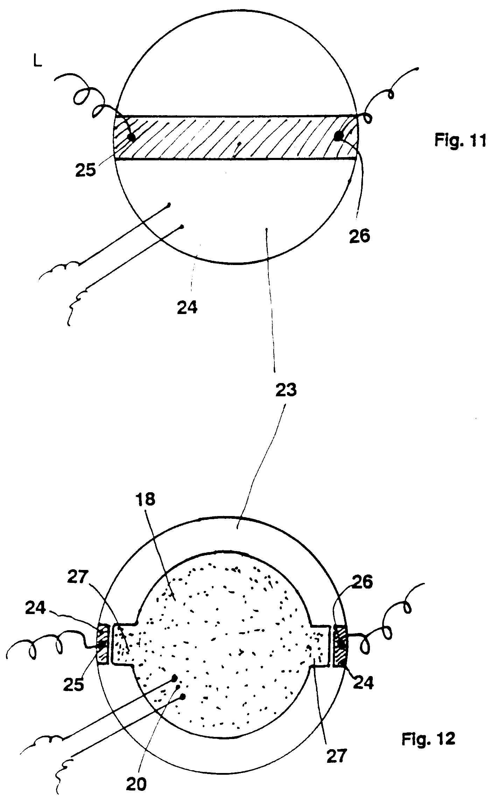

Die **Figuren 11 und 12** zeigen eine weitere Möglichkeit der pyrotechnischen Trennung der Netzzuleitungen. Auf einer isolierten, beispielweise kugelförmigen Kapsel 23 ist ein elektrisch leitendes, in sich geschlossenes Band 24, welches vorzugsweise aus Kupfer besteht, aufgebracht. Die Stromzuleitungen, die es im Fehlerfall zu trennen gilt, sind an gegenüberliegenden Stellen 25 und 26 auf dem Band 24 angebracht. Im Innern der Kapsel befindet sich analog Fig. 9 und 10 Pulver 18. Im Fehlerfall wird dieses analog Fig. 9 und 10 mittels der Zündfunkenstrecke 20 gezündet. Damit die Kapsel 23 nicht unkontrolliert zerplatzt, ist ihre Wand unterhalb des Bandes 24 mit einer Nut 27 versehen, die als Sollbruchstelle dient und infolge der Explosion bricht und das Band 24 zuverlässig zertrennt.
**Fig. 13** zeigt eine der Fig. 11 bzw. 12 ähnliche Trennvorrichtung. Zwei patronenähnliche Gebilde 27 und 28 oder patronen - und kolbenartige, sind elektrisch leitend ineinandergesteckt und mit Pulver 18 gefüllt. Aus verschiedenen Gründen, sicherheits - und fertigungstechnischer Art, befindet sich das Pulver 18 in einer isolierenden Kapsel 29, in die die Zündleitungen 30, elektrisch isoliert, zur Zündfunkenstrecke 20 hineinführen. Nach Zündung zerplatzt die Kapsel, der Explosionsdruck treibt die beiden Gebilde 27 und 28 auseinander und trennt dadurch zuverlässig die mit ihnen verbundenen Netzzuleitungen.

Weitere vorteilhafte Ausgestaltungen der erfindungsgemäßen Gedanken sind in den Unteransprüchen 12 bis 15 aufgeführt.

## Patentansprüche

1. Fehlerstromschutzschalter mit Fail-safe-Verhalten,dadurch gekennzeichnet,daß bei Versagen der Fehlerstromschutzfunktion innerhalb einer vorgegebenen Zeit irreversibel die Hauptstromzuleitungen unterbrochen werden.

2. Fehlerstromschutzschalter nach Anspruch 1 , dadurch gekennzeichnet, daß der Fehlerstrom gemessen wird und bei Überschreiten eines vorgegebenen Grenzwertes nach einer vorgegebenen und/oder vorgebbaren Zeit die Haupt-Stromzuleitungen in einer Zusatztrenneinrichtung unterbrochen werden.

3. Fehlerstromschutzschalter nach Anspruch 1 und 2, dadurch gekennzeichnet, daß das Erkennen des Versagens , d. h. das Nichtöffnen der Hauptstromkontakte im Fehlerstromfall mit Hilfe einer Spannungsmessung hinter den Hauptstromkontakten erfolgt.

4. Fehlerstromschutzschalter nach Anspruch 1 -3, dadurch gekennzeichnet, daß zur Trennung der Hauptstromzuleitungen ein Isolierschieber zwischen zwei Kontakte geschoben wird.

5. Fehlerstromschutzschalter nach Anspruch 1 -3 , dadurch gekennzeichnet,daß zur Trennung der Hauptstromzuleitungen ein Messer, vorzugsweise ein isoliertes Messer, die Leitungen zerschneidet.

6. Fehlerstromschutzschalter nach Anspruch 1 -3, dadurch gekennzeichnet, daß ein isolierter Stößel eine Sollbruchstelle in der Zuleitung aufschlägt.

7. Fehlerstromschutzschalter nach Anspruch 1 -3 ,dadurch gekennzeichnet,daß ein Elektromagnet einen Kontaktstift aus einer Kontakthülse zieht.

8. Fehlerstromschutzschalter nach Anspruch 1 - 3 , dadurch gekennzeichnet, daß ein Elektromagnet einen Kontaktstift aus einer Kontakthülse herausschiebt.

9. Fehlerstromschutzschalter nach Anspruch 1 - 8 , dadurch gekennzeichnet, daß als Antrieb für das Trennen der Netzzuleitungen ein pyrotechnisches System Verwendung findet, das einen Kolben und/oder Stößel durch Zünden eines Sprengmittels bewegt.

10. Fehlerstromschutzschalter nach Anspruch 1 - 3 , dadurch gekennzeichnet, daß eine oder mehrere, auf einer Sprengkapsel aufgebrachte, elektrisch leitende Schichten zerstört und dadurch die Netzzuleitungen aufgetrennt werden.

11. Fehlerstromschutzschalter nach Anspruch 10, dadurch gekennzeichnet, daß die Kapsel unter der elektrisch leitenden Schicht, wenigstens eine Sollbruchstelle aufweist.

12. Fehlerstromschutzschalter nach Anspruch 1 -3, dadurch gekennzeichnet, daß je zwei patronenähnliche elektrisch leitende Gebilde mit ihren Öffnungen ineinander gesteckt, mit Pulver gefüllt sind und bei Explosion desselben die an ihnen angebrachten Netzzuleitungen trennen.

13. Fehlerstromschutzschalter nach Anspruch 12, dadurch gekennzeichnet, daß sich das Pulver in einer isolierten Kapsel befindet.

14. Fehlerstromschutzschalter nach Anspruch 1 - 13, dadurch gekennzeichnet, daß die beschriebenen Antriebssysteme für die Trennung der Hauptstromzuleitungen durch einen Federspeicher und/oder ein Hebelsystem ergänzt sind, die mit minimaler Energie ausgelöst werden können.

15. Fehlerstromschutzschalter nach Anspruch 1 - 3, dadurch gekennzeichnet, daß die Unterbrechung der Hauptstromzuleitungen mit Hilfe von wenigstens einer Drahtexplosion erfolgt,die durch einen künstlich erzeugten Kurzschluß ausgelöst wird.

16. Fehlerstromschutzschalter nach Anspruch 1 - 3, dadurch gekennzeichnet, daß für die Trennung speziell ausgebildete Schmelzsicherungen Verwendung finden,deren Verlustleistungen für die entspechenden Nennstromstärken unter denen herkömmlicher Schmelzsicherungen liegen.

17. Fehlerstromschutzschalter nach Anspruch 1 - 16, dadurch gekennzeichnet, daß alle Baugruppen, die für die Erfüllung aller Funktionen des erfindungsgemäßen Fehlerstromschutzschalters mit Fail-safe-Verhalten notwendig sind, in einem Gehäuse untergebracht sind.
